# EUROPÄISCHE PATENTSCHRIFT

(11) **EP 3 097 393 B1**
(45) Veröffentlichungstag und Bekanntmachung des Hinweises auf die Patenterteilung: **14.02.2018**
(21) Anmeldenummer: 15800737.7
(22) Anmeldetag: 10.11.2015
(51) Int. Cl.: G01F 23/296, G01N 29/28

(54) **BEHÄLTNISSYSTEM FÜR EIN FLUID UND VERFAHREN ZU DESSEN HERSTELLUNG**
FLUID RECEPTACLE AND METHOD OF ITS FABRICATION
RÉCIPIENT POUR UN FLUIDE ET PROCÉDÉ DE FABRICATION

(30) Priorität: 11.11.2014 DE 102014223007
(43) Veröffentlichungstag der Anmeldung: 30.11.2016
(73) Patentinhaber: Continental Automotive GmbH, 30165 Hannover (DE)
(72) Erfinder: FIALKA, Otakar, 73801 Frydek-Mistek (CZ); PFEIFFER, Karl-Friedrich, 91058 Erlangen (DE)
(86) Internationale Anmeldenummer: PCT/EP2015/076180
(87) Internationale Veröffentlichungsnummer: WO 2016/075126

(56) Entgegenhaltungen:
- EP-A2- 0 769 682
- DE-A1-102010 035 008
- US-A- 4 770 038
- US-A1- 2013 074 601

## Beschreibung

Die Erfindung betrifft ein Behältnissystem für ein Fluid sowie ein Verfahren zur Herstellung eines Behältnissystems für ein Fluid.

Zum Vermessen eines Fluids in einem Fluidbehälter kann insbesondere eine akustische Messvorrichtung eingesetzt werden. Ein Schallwandler der akustischen Messvorrichtung kann sowohl als Schallerzeuger als auch als Schallempfänger arbeiten. Für eine Bestimmung einer Höhe einer Fluidoberfläche oder einer Konzentration des Fluids in dem Fluidbehälter können mittels des Schallwandlers Schallimpulse in das zu vermessende Fluid abgegeben werden. Die Schallimpulse können von einer Grenzfläche des Fluids zu einem weiteren Medium reflektiert werden. Aus der Laufzeit der Schallimpulse können Rückschlüsse auf Eigenschaften des Fluids in dem Fluidbehälter gezogen werden.

Die DE 10 2010 035 008 A1 betrifft eine Vorrichtung zum Messen des Füllstands eines Harnstoffbehälters durch Wegbestimmung mit durch einen Sensor emittierte Schallwellen und deren Echo.

Aus der EP 0 769 682 A2 ist eine Anordnung zur Überwachung eines vorbestimmten Zustands einer Flüssigkeit in einem Behälter bekannt.

Die US 2013/0074601 A1 beschreibt eine Vorrichtung für Ultraschallwandlers oder andere Berührungssensoranordnungen gegen ein Festmaterial.

Die DE 4 770 038 beschreibt einen Ultraschalltiefenmesser für Flüssigkeiten unter Hochdruck.

Die Aufgabe, die der Erfindung zugrunde liegt, ist es, ein Behältnissystem für ein Fluid zu schaffen, das ein präzises und zuverlässiges Vermessen des Fluids ermöglicht. Des Weiteren ist es die Aufgabe der Erfindung, ein Verfahren zur Herstellung eines Behältnissystems für ein Fluid zu schaffen, welches ein präzises und zuverlässiges Vermessen des Fluids ermöglicht.

Die Aufgabe wird gelöst durch die Merkmale der unabhängigen Patentansprüche. Vorteilhafte Weiterbildungen der Erfindung sind in den Unteransprüchen gekennzeichnet.

Gemäß einem ersten Aspekt zeichnet sich die Erfindung aus durch ein Behältnissystem für ein Fluid, das ein Behältnis zur Bevorratung des Fluids umfasst. Das Behältnis weist eine Außenwandung sowie eine Kavität auf. Dem Behältnis ist entweder ein Kulissenelement oder ein Kulissenstein zugeordnet.

Das Behältnissystem umfasst ferner eine Schallwandlungseinheit zur Vermessung des Fluids. Die Schallwandlungseinheit weist eine Längsachse auf. Der Schallwandlungseinheit ist entweder der Kulissenstein, falls dem Behältnis das Kulissenelement zugeordnet ist, oder das Kulissenelement zugeordnet, falls dem Behältnis der Kulissenstein zugeordnet ist. Des Weiteren weist das Behältnissystem ein Kopplungselement zur akustischen Kopplung der Schallwandlungseinheit mit dem Behältnis auf. Das Kulissenelement und der Kulissenstein bilden eine Kulisse zur Führung der Schallwandlungseinheit relativ zu dem Behältnis. Eine Kontur des Kulissenelements ist derart ausgebildet, dass bei einem Einführen der Schallwandlungseinheit in die Kavität ein erster Bewegungsverlauf der Schallwandlungseinheit relativ zu dem Behältnis erfolgt. Der erste Bewegungsverlauf erfolgt im Wesentlichen frei von einem mechanischen Kontakt des Kopplungselements mit entweder der Schallwandlungseinheit oder der Außenwandung.

Die Kontur des Kulissenelements ist ferner derart ausgebildet, dass anschließend an den ersten Bewegungsverlauf ein zweiter Bewegungsverlauf erfolgt mit einem Verschwenken der Schallwandlungseinheit relativ zu dem Behältnis, bis die Schallwandlungseinheit eine Endposition erreicht, in der das Kopplungselement zwischen der Außenwandung und der Schallwandlungseinheit eingepresst ist.

Das Kopplungselement ermöglicht einen Ausgleich von Fertigungstoleranzen, so dass zu einer Vermeidung eines Luft- oder Feuchtigkeitseinschlusses zwischen der Schallwandlungseinheit und der Außenwandung des Behältnisses beigetragen wird. Dies bewirkt eine besonders effiziente akustische Kopplung der Schallwandlungseinheit und der Außenwandung. Das Kopplungselement leistet in diesem Zusammenhang einen Beitrag zu einer zuverlässigen und präzisen Vermessung des Fluids durch die Schallwandlungseinheit.

Eine derartige Führung der Bewegung der Schallwandlungseinheit und des Behältnisses relativ zueinander ermöglicht bei Herstellung des Behältnissystems, dass eine ungewollte Deformation des Kopplungselements vermieden wird. In vorteilhafter Weise wird so ein besonders zuverlässiger Betrieb des Behältnissystems ermöglicht. Ferner wird eine Montage des Behältnissystems ohne zusätzliche Bauteile wie Keil und Schraube ermöglicht.

In diesem Zusammenhang ist beispielsweise das Kulissenelement dem Behältnis zugeordnet und der dazu korrespondierende Kulissenstein ist der Schallwandlungseinheit zugeordnet. Alternativ ist beispielsweise das Kulissenelement der Schallwandlungseinheit zugeordnet und der dazu korrespondierende Kulissenstein ist dem Behältnis zugeordnet.

Das Kulissenelement ist beispielsweise als Schlitz, Steg oder Nut ausgebildet. Der Kulissenstein ist beispielsweise als Stift oder Zapfen ausgebildet. Der Kulissenstein ist durch das Kulissenelement beispielsweise beidseitig zwangsgeführt. Eine Übertragungsfunktion der aus Kulissenstein und Kulissenelement gebildeten Kulisse ist durch einen Verlauf der Kontur des Kulissenelements vorgegeben. Eine derartige Führung kann auch als Kulissenführung bezeichnet werden.

Eine Kraft, die bei der Herstellung des Behältnissystems in dem ersten Bewegungsverlauf der Schallwandlungseinheit relativ zu dem Behältnis auf das Kopplungselement wirkt, wird im Wesentlichen lediglich durch eines aus der Schallwandlungseinheit und der Außenwandung hervorgerufen, so dass das Kopplungselement in dem ersten Bewegungsverlauf keine ungewollte Deformation erfährt. Insbesondere wird die Kraft entweder lediglich durch die Schallwandlungseinheit oder lediglich durch die Außenwandung hervorgerufen.

Insbesondere erfolgt der erste Bewegungsverlauf der Schallwandlungseinheit relativ zu dem Behältnis dazu entlang der Längsachse. Das Kopplungselement ist in vorteilhafter Weise dabei bereits auf der Schallwandlungseinheit angeordnet. Alternativ ist das Kopplungselement bereits auf der Außenwandung angeordnet.

Das Kopplungselement kann auch als Kopplungskissen bezeichnet werden. Das Kopplungskissen ist vorzugsweise aus einem gummiartigen Material hergestellt.

In einer vorteilhaften Ausgestaltung gemäß dem ersten Aspekt ist dem Behältnis entweder ein Gelenkkopf oder eine Gelenkpfanne zugeordnet. Ferner ist der Schallwandlungseinheit die Gelenkpfanne, falls dem Behältnis der Gelenkkopf zugeordnet ist, oder der Gelenkkopf zugeordnet, falls dem Behältnis die Gelenkpfanne zugeordnet ist. Der Gelenkkopf und die Gelenkpfanne bilden ein Gelenk zur Führung der Schallwandlungseinheit relativ zu dem Behältnis in dem zweiten Bewegungsverlauf.

Das Gelenk ermöglicht eine zuverlässige und präzise Führung der Bewegung der Schallwandlungseinheit und des Behältnisses relativ zueinander, so dass bei Herstellung des Behältnissystems eine ungewollte Deformation des Kopplungselements vermieden wird. In einer weiteren vorteilhaften Ausgestaltung gemäß dem ersten Aspekt sind das Kulissenelement und der Kulissenstein ausgebildet zur Fixierung der Schallwandlungseinheit bezüglich des Behältnisses in der Endposition.

Dies trägt zu einem langlebig zuverlässigen Betrieb des Behältnissystems bei. Eine Fixierung der Schallwandlungseinheit bezüglich des Behältnisses mittels des Kulissenelements und des Kulissensteins trägt dabei zu einer einfachen Montage des Behältnissystems bei.

In einer weiteren vorteilhaften Ausgestaltung gemäß dem ersten Aspekt ist dem Behältnis mindestens eine zusätzliche Führungswand zugeordnet, die einen Teil der Kulisse umfasst.

Dies trägt insbesondere im Falle einer Fixierung der Schallwandlungseinheit bezüglich des Behältnisses mittels dem Kulissenelement und dem Kulissenstein dazu bei, dass die Fixierung von außen zugänglich und damit einfach lösbar ausgebildet sein kann. Ferner wird durch ein teilweises Anordnen und/oder Fixieren der Schallwandlungseinheit außerhalb der Kavität ein Volumenverlust des Behältnisses aufgrund der Schallwandlungseinheit gering gehalten.

Beispielsweise umfasst die Außenwandung die mindestens eine Führungswand. Alternativ ist die mindestens eine Führungswand beispielsweise angeschweißt an die Außenwandung.

Gemäß einem zweiten Aspekt zeichnet sich die Erfindung aus durch ein Verfahren zur Herstellung eines Behältnissystems für ein Fluid, welches ein Behältnis zur Bevorratung des Fluids umfasst. Das Behältnis weist eine Außenwandung sowie eine Kavität auf. Dem Behältnis wird entweder ein Kulissenelement oder ein Kulissenstein zugeordnet.

Das Behältnissystem umfasst ferner eine Schallwandlungseinheit zur Vermessung des Fluids. Die Schallwandlungseinheit weist eine Längsachse auf. Der Schallwandlungseinheit wird entweder der Kulissenstein, falls dem Behältnis das Kulissenelement zugeordnet wird, oder das Kulissenelement zugeordnet, falls dem Behältnis der Kulissenstein zugeordnet wird.

Des Weiteren umfasst das Behältnissystem ein Kopplungselement zur akustischen Kopplung der Schallwandlungseinheit mit dem Behältnis. Die Schallwandlungseinheit wird in einem ersten Bewegungsverlauf relativ zu dem Behältnis in die Kavität eingeführt, und zwar derart, dass das Kopplungselement im Wesentlichen frei ist von einem mechanischen Kontakt mit entweder der Schallwandlungseinheit oder der Außenwandung.

Die Schallwandlungseinheit wird ferner in einem zweiten Bewegungsverlauf relativ zu dem Behältnis verschwenkt, bis eine Endposition der Schallwandlungseinheit bezüglich des Behältnisses erreicht wird, in der das Kopplungselement zwischen der Außenwandung und der Schallwandlungseinheit eingepresst ist.

Das Kulissenelement und der Kulissenstein werden zu einer Kulisse gekoppelt, zur Führung der Schallwandlungseinheit relativ zu dem Behältnis in dem ersten Bewegungsverlauf und in dem zweiten Bewegungsverlauf.

Ein derartiger Bewegungsverlauf der Schallwandlungseinheit und des Behältnisses relativ zueinander ermöglicht bei Herstellung des Behältnissystems, dass eine ungewollte Deformation der Kopplungsschicht vermieden wird. In vorteilhafter Weise wird so ein besonders zuverlässiger Betrieb des Behältnissystems ermöglicht.

Der Bewegungsverlauf der Schallwandlungseinheit und des Behältnisses relativ zueinander kann dabei beispielsweise maschinell geführt erfolgen. Alternativ und/oder zusätzlich kann das Behältnissystem in diesem Zusammenhang beispielsweise Führungselemente aufweisen.

In einer weiteren vorteilhaften Ausgestaltung gemäß dem zweiten Aspekt wird die Schallwandlungseinheit bei Erreichen der Endposition bezüglich des Behältnisses fixiert durch das Kulissenelement und den Kulissenstein.

In einer weiteren vorteilhaften Ausgestaltung gemäß dem zweiten Aspekt wird dem Behältnis entweder ein Gelenkkopf oder eine Gelenkpfanne zugeordnet.

Des Weiteren wird der Schallwandlungseinheit entweder die Gelenkpfanne, falls dem Behältnis der Gelenkkopf zugeordnet wird, oder der Gelenkkopf zugeordnet, falls dem Behältnis die Gelenkpfanne zugeordnet wird. Der Gelenkkopf und die Gelenkpfanne werden zu einem Gelenk gekoppelt, zur Führung der Schallwandlungseinheit relativ zu dem Behältnis in dem zweiten Bewegungsverlauf.

Ausführungsbeispiele der Erfindung sind im Folgenden anhand der schematischen Zeichnungen erläutert.
- Figur 1: ein Ausführungsbeispiel eines Behältnissystems,
- Figur 2a: eine perspektivische Darstellung eines Behältnisses des Behältnissystems gemäß Figur 1,
- Figur 2b: eine perspektivische Darstellung einer Schallwandlungseinheit des Behältnissystems gemäß Figur 1,
- Figur 3: ein Ablaufdiagramm zur Herstellung des Behältnissystems gemäß Figur 1,
- Figur 4a,...4d: Montageschritte zur Herstellung des Behältnissystems gemäß Figur 1,
- Figur 5a,...5i: Komponenten eines zweiten Behältnissystems, und
- Figur 6a,...6c: Montageschritte zur Herstellung eines weiteren Behältnissystems.

Elemente gleicher Konstruktion oder Funktion sind figurenübergreifend mit den gleichen Bezugszeichen versehen.

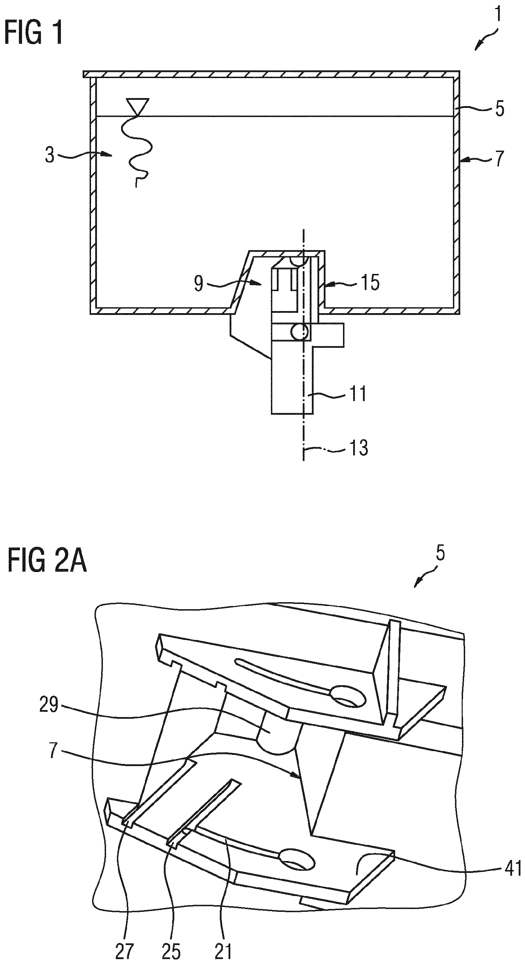

Figur 1 zeigt ein Behältnissystem 1 für ein Fluid 3 in einem montierten Zustand, welches ein Behältnis 5 zur Bevorratung des Fluids 3 umfasst. Das Behältnis 5 weist eine Außendwandung 7 sowie eine Kavität 9 auf.

Das Behältnissystem 1 umfasst ferner eine Schallwandlungseinheit 11 zur Vermessung des Fluids 3. Die Schallwandlungseinheit 11 ist beispielsweise ausgebildet, ein Ultraschallsignal in das Behältnis 5 zu senden, und/oder ein reflektiertes Ultraschallsignal aus dem Behältnis 5 zu empfangen. In diesem Zusammenhang wird beispielsweise eine Konzentration des Fluids 3 oder ein Füllstand des Fluids 3 in dem Behältnis 5 ermittelt. Bei dem Fluid 3 handelt es sich beispielsweise um ein flüssiges Medium zur Schadstoffreduktion in Abgasen, das vorzugsweise ein Reduktionsmittel und/oder einen Reduktionsmittelvorläufer, beispielsweise eine wässrige Harnstofflösung aufweist.

Die Kavität 9 des Behältnisses 5 ist ausgebildet die Schallwandlungseinheit 11 aufzunehmen. In dem montierten Zustand ragt die Schallwandlungseinheit 11 beispielsweise zumindest teilweise in die Kavität 9. Insbesondere ist die Schallwandlungseinheit 11 so ausgebildet, dass eine Hauptstrahlungsrichtung der Ultraschallsignale parallel zu einem Bodenabschnitt des Behältnisses 5 verläuft. In dem montierten Zustand ist die Schallwandlungseinheit 9 in diesem Zusammenhang beispielhaft mit ihrer Längsachse 13 senkrecht zu einem Bodenabschnitt des Behältnisses 5 angeordnet.

Des Weiteren umfasst das Behältnissystem 1 ein Kopplungselement 15, das ausgebildet ist zu einer akustischen Kopplung der Schallwandlungseinheit 11 mit dem Behältnis 5. Das Kopplungselement 15 ist dazu in einem Kopplungsbereich der Außenwandung 7 angeordnet. Insbesondere trägt das Kopplungselement 15 dabei dazu bei, einen Luft- oder Feuchtigkeitseinschluss zwischen der Außenwandung 7 und der Schallwandlungseinheit 11 zu vermeiden und/oder Fertigungstoleranzen auszugleichen.

Das Kopplungselement 15 ist aus einem elastischen Material hergestellt. Insbesondere ist das Kopplungselement 15 aus einem gummiartigen Material hergestellt, wie zum Beispiel Silikon.

Um eine zuverlässige und präzise Vermessung des Fluids 3 zu gewährleisten ist es insbesondere notwendig, dass das Kopplungselement 15 möglichst gleichmäßig und dicht an der Außenwandung 7 und der Schallwandlungseinheit 11 anliegt. In vorteilhafter Weise ist das Kopplungselement 15 dazu zwischen der Außenwandung 7 und der Schallwandlungseinheit 11 eingepresst.

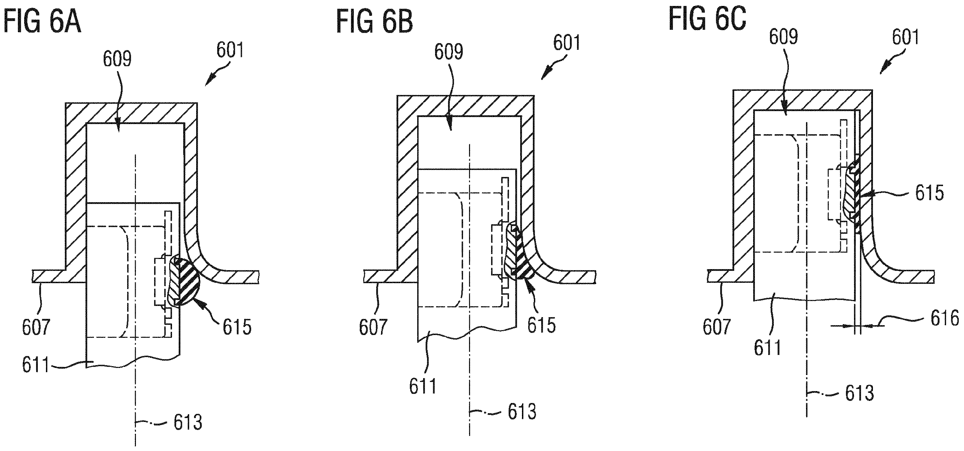

Figuren 6a bis 6c zeigen Montageschritte eines weiteren Behältnissystems 601 mit einem Behältnis 605, welches eine Außenwandung 607 sowie eine Kavität 609 aufweist. Das weitere Behältnissystem 601 umfasst ferner eine Schallwandlungseinheit 611 mit einer Längsachse 613, an welcher ein Kopplungselement 615 angeordnet ist. Beim Einführen der Schallwandlungseinheit 611 in die Kavität 609 wird das Kopplungselement 615 durch einen vorgegebenen Abstand 616 zwischen der Außenwandung 607 und dem Schallwandlungselement 611 verpresst. Dabei tritt eine ungewollte Deformation des Kopplungselements 615 auf (siehe Figur 6b) .

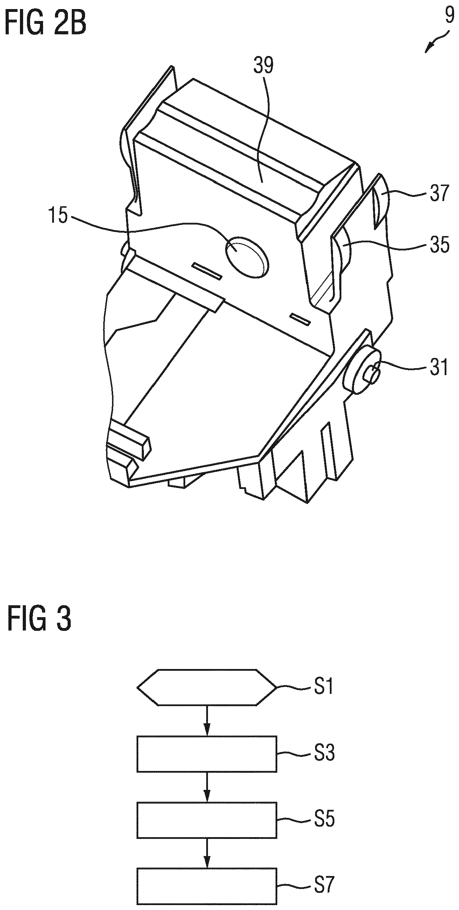

In diesem Zusammenhang sind dem Behältnis 5 des Behältnissystems 1 gemäß Figur 1 Kulissenelemente 21, 25, 27 zugeordnet (siehe Figur 2a). Ferner sind der Schallwandlungseinheit 11 des Behältnissystems 1 gemäß Figur 1 Kulissensteine 31, 35, 37 zugeordnet (siehe Figur 2b). Insbesondere sind auf einer den Kulissenelementen 21, 25, 27 gegenüberliegenden Seite der Kavität zu den Kulissenelementen 21, 25, 27 korrespondierende weitere Kulissenelemente angeordnet, sowie auf einer den Kulissensteinen 31, 35, 37 gegenüberliegenden Seite der Schallwandlungseinheit 11 zu den Kulissensteinen 31, 35, 37 korrespondierende weitere Kulissensteine angeordnet.

In einem anderen Ausführungsbeispiel sind die Kulissenelemente 21, 25, 27 beispielsweise der Schallwandlungseinheit 11 zugeordnet und die Kulissensteine 31, 35, 37 dem Behältnis 5.

Die Kulissenelemente 21, 25, 27 sind mit den Kulissensteinen 31, 35, 37 koppelbar ausgebildet eine Kulisse zur Führung der Schallwandlungseinheit 11 relativ zu dem Behältnis 5 zu bilden.

Zusätzlich und/oder alternativ ist dem Behältnis 5 beispielsweise ein Gelenkkopf 29 zugeordnet (siehe Figur 2a). Der Schallwandlungseinheit 11 ist ferner eine Gelenkpfanne 39 zugeordnet (siehe Figur 2b). Der Gelenkkopf 29 ist dabei beispielsweise eine Auswölbung der Außenwandung 7.

In einem anderen Ausführungsbeispiel ist der Gelenkkopf 29 beispielsweise der Schallwandlungseinheit 11 zugeordnet und die Gelenkpfanne 39 dem Behältnis 5.

Der Gelenkkopf 29 ist mit der Gelenkpfanne 39 koppelbar ausgebildet ein Gelenk zur Führung der Schallwandlungseinheit 11 relativ zu dem Behältnis 5 zu bilden.

Eine Kontur der Kulissenelemente 21, 25, 27 ist derart ausgebildet, dass bei einer Montage des Behältnissystems 1 ein erster Bewegungsverlauf der Schallwandlungseinheit 11 relativ zu dem Behältnis 5 geführt erfolgt, so dass das Kopplungselement 15 im Wesentlichen frei ist von einem mechanischen Kontakt mit entweder der Schallwandlungseinheit 11 oder der Außenwandung 7.

Insbesondere wirkt in diesem Zusammenhang im Wesentlichen lediglich eine Kraft entweder der Schallwandlungseinheit 11 oder der Außenwandung 7 auf das Kopplungselement, so dass das Kopplungselement 15 in dem ersten Bewegungsverlauf keine ungewollte Deformation erfährt.

Beispielhaft ist ein Volumen der Kavität 9 insbesondere im Hinblick auf ein Volumen der Kavität 609 des weiteren Behältnissystems 601 erhöht. Insbesondere ist eine dem Kopplungsbereich der Außenwandung 7 gegenüberliegende Seite der Außenwandung 7 in diesem Zusammenhang abgeschrägt, so dass sie mit dem Kopplungsbereich der Außenwandung 7 einen Winkel einschließt. Das Einführen der Schallwandlungseinheit 11 in dem ersten Bewegungsverlauf erfolgt beispielsweise parallel zu der dem Kopplungsbereich gegenüberliegenden Seite der Außenwandung 7. Insbesondere erfolgt der erste Bewegungsverlauf entlang der Längsachse 13.

Die Kontur der Kulissenelemente 21, 25, 27 ist ferner derart ausgebildet, dass bei der Montage anschließend an den ersten Bewegungsverlauf ein zweiter Bewegungsverlauf der Schallwandlungseinheit 11 relativ zu dem Behältnis 5 mit einem Verschwenken der Schallwandlungseinheit 11 relativ zu dem Behältnis 5 geführt erfolgt, bis die Schallwandlungseinheit 11 eine Endposition bezüglich des Behältnisses 5 erreicht, in der das Kopplungselement 15 zwischen der Außenwandung 7 und der Schallwandlungseinheit 11 eingepresst ist.

In vorteilhafter Weise wird dadurch eine kontrollierte Deformation des Kopplungselements 15 gewährleistet. Dies hat den Vorteil, dass das Kopplungselement 15 beispielsweise besonders gleichmäßig zwischen der Schallwandlungseinheit 11 und der Außenwandung 7 anliegt. Insbesondere wird so ein besonders zuverlässiger Betrieb des Behältnissystems 1 ermöglicht.

Die Kulissenelemente 21, 25, 27 sind insbesondere als Ausnehmung ausgebildet, beispielsweise als Schlitz, Steg oder Nut. Die Kulissensteine 31, 35, 37 sind korrespondierend dazu insbesondere als Vorsprung ausgebildet, beispielsweise als Führungsstift, Zapfen oder Schiene. Die aus den Kulissenelementen 21, 25, 27 und den Kulissensteinen 31, 35, 37 gebildete Kulisse kann auch als Schlitz-Zapfen-Verbindung oder Nut-Feder-Verbindung bezeichnet werden, die miteinander koppelbar zur Führung der Schallwandlungseinheit 9 relativ zu dem Behältnis 5 ausgebildet ist.

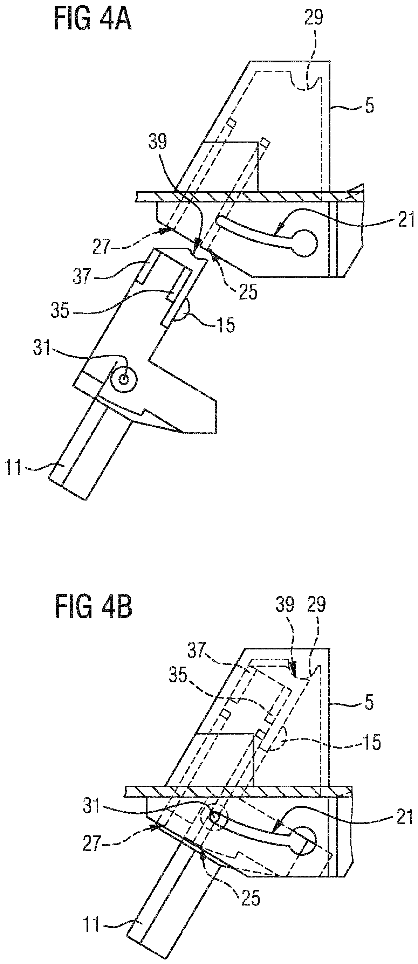

Im Folgenden werden die Montageschritte zur Herstellung des Behältnissystems 1 anhand des Ablaufdiagramms der Figur 3, sowie den Figuren 4a - 4d beschrieben.

In einem Schritt S1 (Figur 4a) werden das Behältnis 5, die Schallwandlungseinheit 11 sowie das Kopplungselement 15 bereitgestellt. Das Kopplungselement 15 ist dabei bevorzugt an der Schallwandlungseinheit 11 befestigt, beispielsweise mittels einer Klebeverbindung, Spritzguss oder durch Anhaften. In anderen Ausführungsbeispielen ist das Kopplungselement 15 beispielsweise an dem Kopplungsbereich der Außenwandung 7 befestigt.

Die schienenartig ausgebildeten Kulissensteine 35, 37 werden mit den rillenartig ausgebildeten Kulissenelementen 25, 27 gekoppelt und die Schallwandlungseinheit 11 geführt durch diese entlang der Längsachse 13 in die Kavität 9 eingeschoben. Eine Breite der Kulissensteine 35, 37 korrespondiert dabei im Wesentlichen zu einer Breite der Kulissenelemente 25, 27. Die Kulissensteine 35, 39 sowie das Kulissenelement 25 sind beispielsweise auf der Längsachse 13 angeordnet, so dass der stiftartig ausgebildete Kulissenstein 39 bei diesem ersten Bewegungsverlauf der Schallwandlungseinheit 11 relativ zu dem Behältnis 5 ebenfalls mit dem Kulissenelement 25 gekoppelt wird und zu einer axialen Führung beiträgt. Ein erster Durchmesser des Kulissensteins 31 korrespondiert in diesem Zusammenhang im Wesentlichen zu der Breite des Kulissenelements 25.

Die schienenartig ausgebildeten Kulissensteine 35, 37 sowie die rillenartig ausgebildeten Kulissenelemente 25, 27 sind insbesondere parallel zueinander, so dass eine besonders präzise, geradlinige Führung ermöglicht wird.

In einem anschließenden Schritt S3 (Figur 4b) erreicht die Schallwandlungseinheit 11 eine axiale Endposition, in der die Gelenkpfanne 39 mit dem Gelenkkopf 29 gekoppelt wird. Ferner wird der Kulissenstein 31 mit dem Kulissenelement 21 gekoppelt. Die Kulissensteine 35, 37 sind insbesondere elastisch ausgebildet, so dass diese bei verringerter Tiefe der Kulissenelemente 25, 27 in Richtung der Schallwandlungseinheit 11 weggedrückt werden. In vorteilhafter Weise werden die Kulissensteine 35, 37 so von den Kulissenelementen 25, 27 entkoppelt, wenn die Schallwandlungseinheit 11 die axialen Endposition erreicht, so dass in einem Schritt S5 ein anschließendes Verschwenken der Schallwandlungseinheit 11 ermöglicht wird.

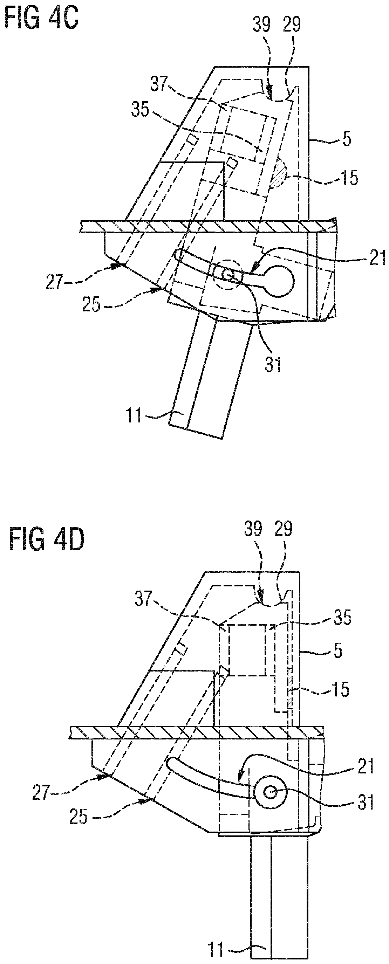

In dem Schritt S5 (Figur 4c) wird die Schallwandlungseinheit 11 in dem zweiten Bewegungsverlauf der Schallwandlungseinheit 11 relativ zu dem Behältnis 5 geführt durch den Kulissenstein 31 in dem Kulissenelement 21 und dem Gelenk 29, 39 um eine Achse des Gelenks 29, 39 verschwenkt.

Erst in einem darauffolgenden Schritt S7 (siehe auch Figur 4d) gerät das Kopplungselement 15 in mechanischen Kontakt mit der Außenwandung 7 und wird zwischen der Schallwandlungseinheit 11 und der Außenwandung 7 eingepresst. In der Endposition der Schallwandlungseinheit 11 bezüglich des Behältnisses 5 ist die Schallwandlungseinheit 11 mit ihrer Längsachse 13 insbesondere parallel zu dem Kopplungsbereich der Außenwandung 7 angeordnet.

Die Schallwandlungseinheit 11 wird in der Endposition bezüglich des Behältnisses 5 insbesondere fixiert, beispielsweise durch den Kulissenstein 31 und das Kulissenelement 21. Beispielsweise weist der Kulissenstein 31 dazu an einer der Schallwandlungseinheit 11 zugewandten Seite einen zweiten Durchmesser auf, der insbesondere größer als der erste Durchmesser des Kulissensteins 31 an einer der Schallwandlungseinheit 11 abgewandten Seite ist.

Das Kulissenelement 21 weist korrespondierend zu der Endposition der Schallwandlungseinheit 11 bezüglich des Behältnisses 5 eine Aufweitung auf, die im Wesentlichen zu dem zweiten Durchmesser des Kulissensteins 31 korrespondiert.

Der Kulissenstein 31 umfasst ferner ein Federelement, welches den Kulissenstein 31 weg von der Schallwandlungseinheit 11 in Richtung des Kulissenelements 21 drückt, so dass der Kulissenstein 31 mit seinem zweiten Durchmesser bei Erreichen der Endposition der Schallwandlungseinheit 11 bezüglich des Behältnisses 5 in der Aufweitung einrastet.

Beispielsweise ist dem Behältnis 5 in diesem Zusammenhang eine Führungswand 41 (siehe Figur 2a) zugeordnet, die das Kulissenelement 21 aufweist, so dass dieses von außen zugänglich ist und die Fixierung einfach gelöst werden kann.

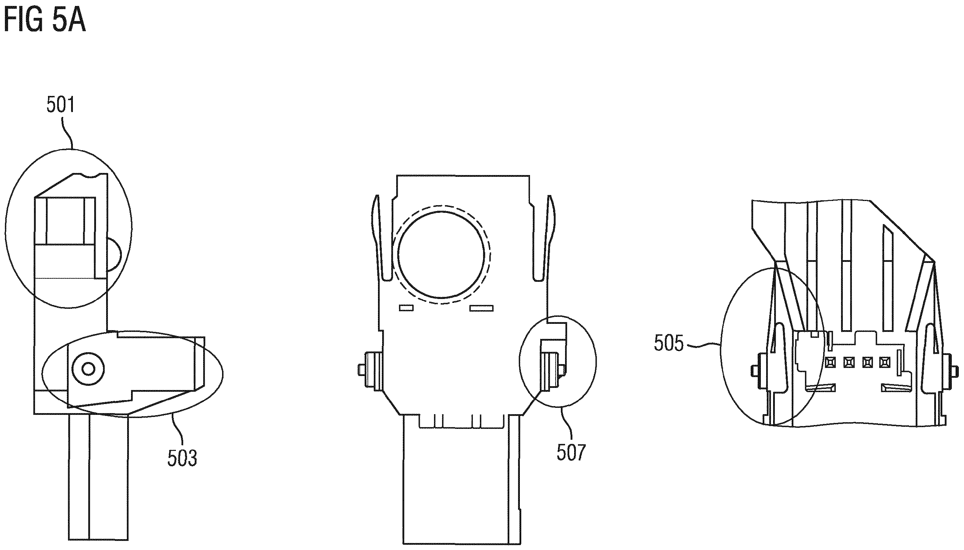

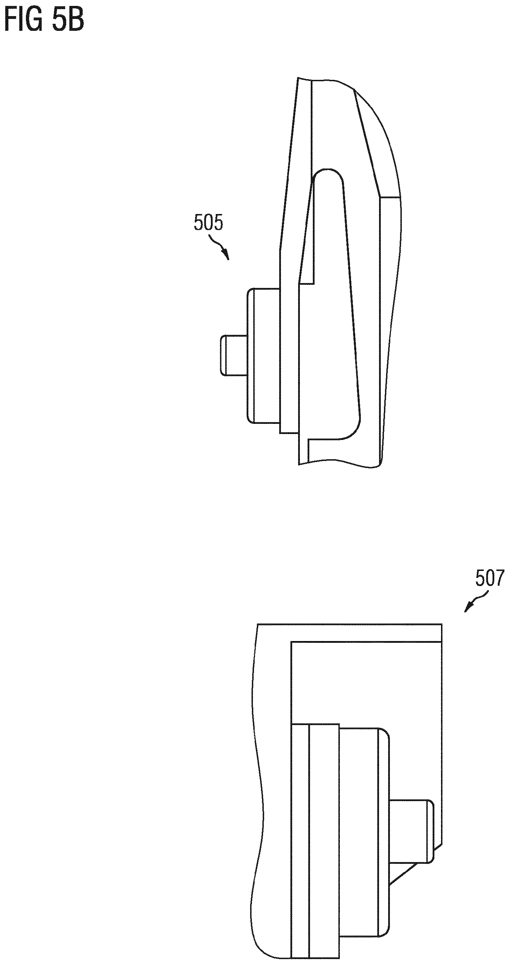

In den Figuren 5a - 5i sind Komponenten eines zweiten Behältnissystems dargestellt. Figur 5a zeigt eine Schallwandlungseinheit aus Seit-, Frontal- und Vogelperspektive, mit einem Paar Vertikalklippse 501 zum Verschieben und Sperren der Schallwandlungseinheit in einer Endposition sowie einem Paar Horizontalklippse 503, 505, 507 zum Verschwenken und Fixieren in der Endposition. Figur 5b zeigt eine Detailansicht der Horizontalklippse 505, 507 aus Frontal- und Vogelperspektive.

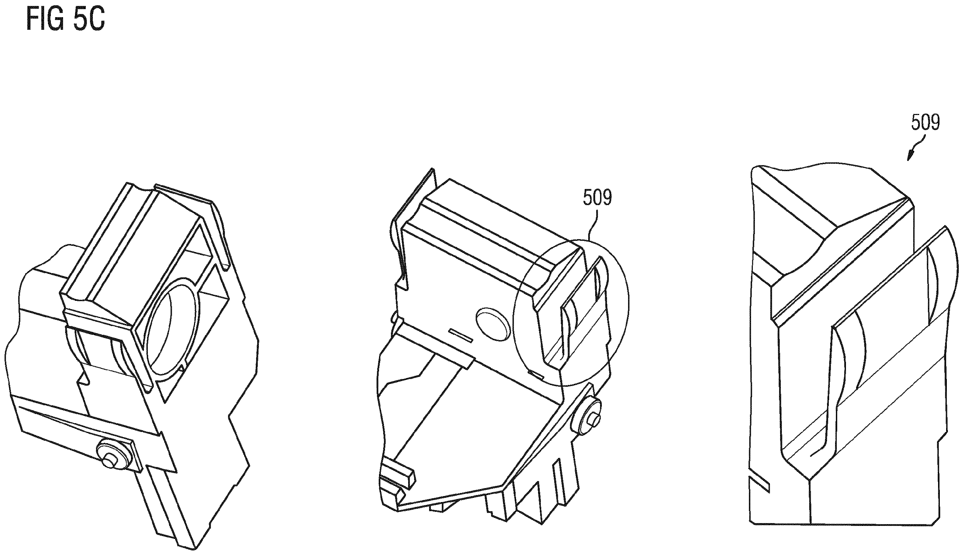

Figur 5c zeigt weitere perspektivische Darstellungen der Schallwandlungseinheit sowie eine Detailansicht der Vertikalklippse 509.

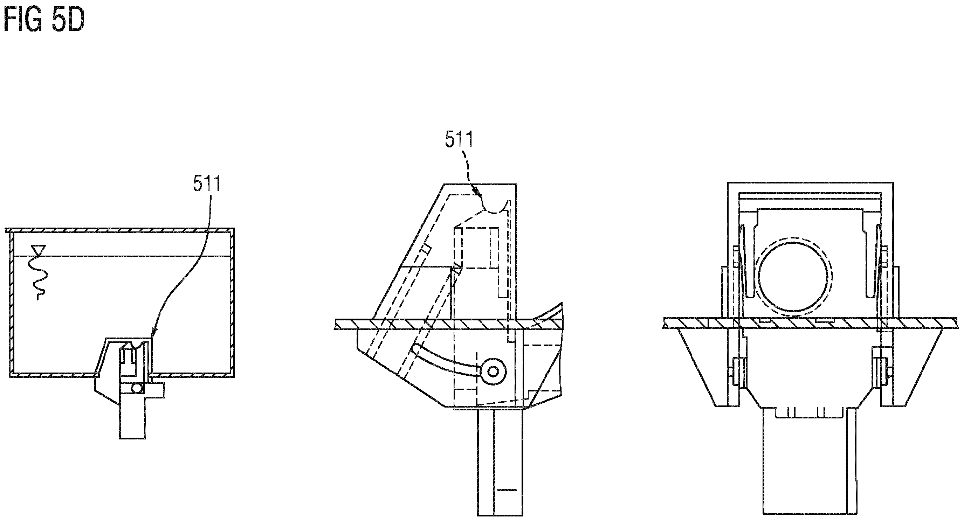

Figur 5d zeigt die Schallwandlungseinheit und ihre Position in dem Behältnis in einer Gesamtansicht sowie aus Seit- und Frontalperspektive, mit einer Auswölbung 511 einer Außenwandung des Behältnisses.

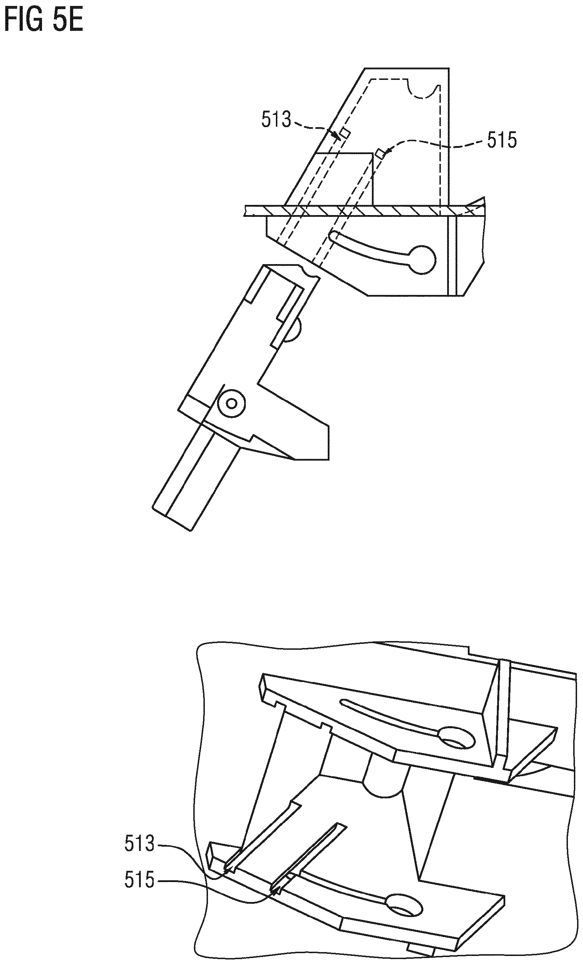

Figur 5e zeigt eine erste Position der Schallwandlungseinheit während einer Montage des zweiten Behältnissystems mit jeweils zwei gegenüberliegenden, parallelen Rillen 513, 515 in der Außenwandung zum Verschieben der Schallwandlungseinheit.

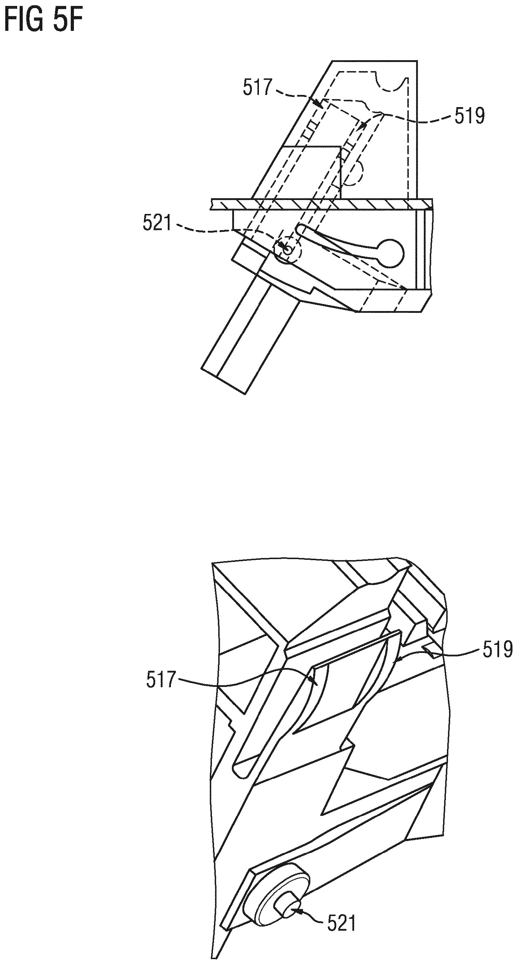

Figur 5f zeigt eine zweite Position der Schallwandlungseinheit während der Montage des zweiten Behältnissystems mit jeweils zwei gegenüberliegenden, parallelen Rippen 517, 519 an den Vertikalklipps, sowie jeweils einen als Führungsstift ausgebildeten, gegenüberliegenden Vorsprung 521 an den Horizontalklipps.

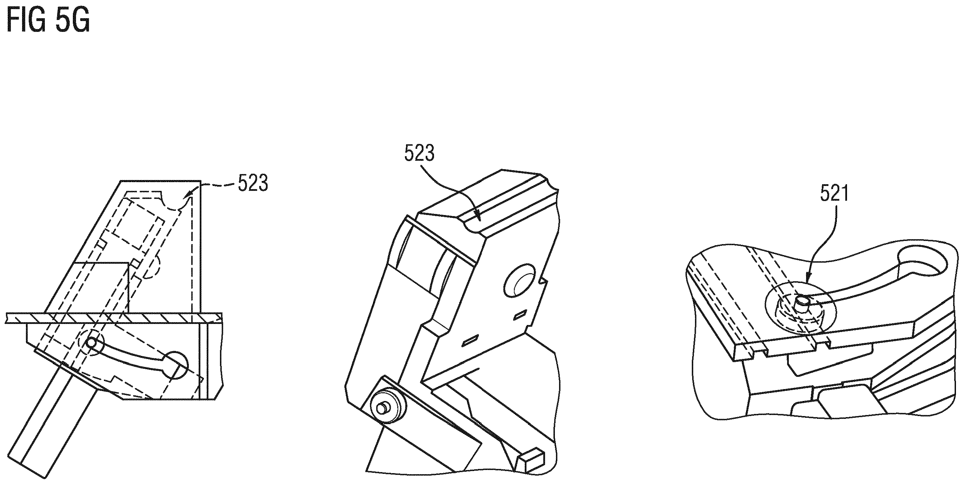

Figur 5g zeigt eine dritte Position der Schallwandlungseinheit während der Montage des zweiten Behältnissystems mit einem Halbzylinderlager 523. Führungselemente 513, 515, 517, 519 werden gelöst, sodass die Schallwandlungseinheit mittels dem Führungsstift verschwenkt werden kann.

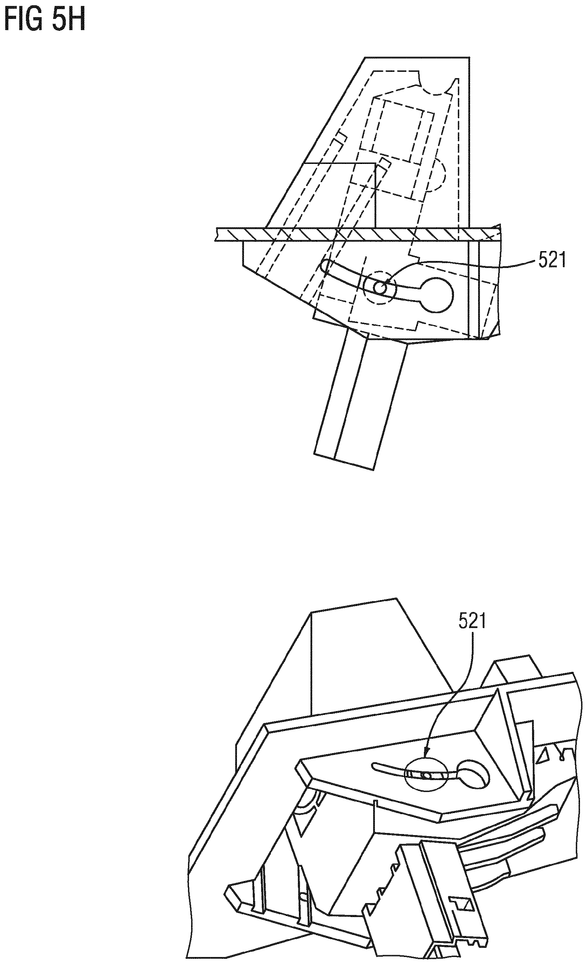

Figur 5h zeigt eine vierte Position der Schallwandlungseinheit während der Montage des zweiten Behältnissystems, bei dem der als Führungsstift ausgebildete Vorsprung 521 auf den Horizontalklipps in einem runden Spalt geschwenkt wird.

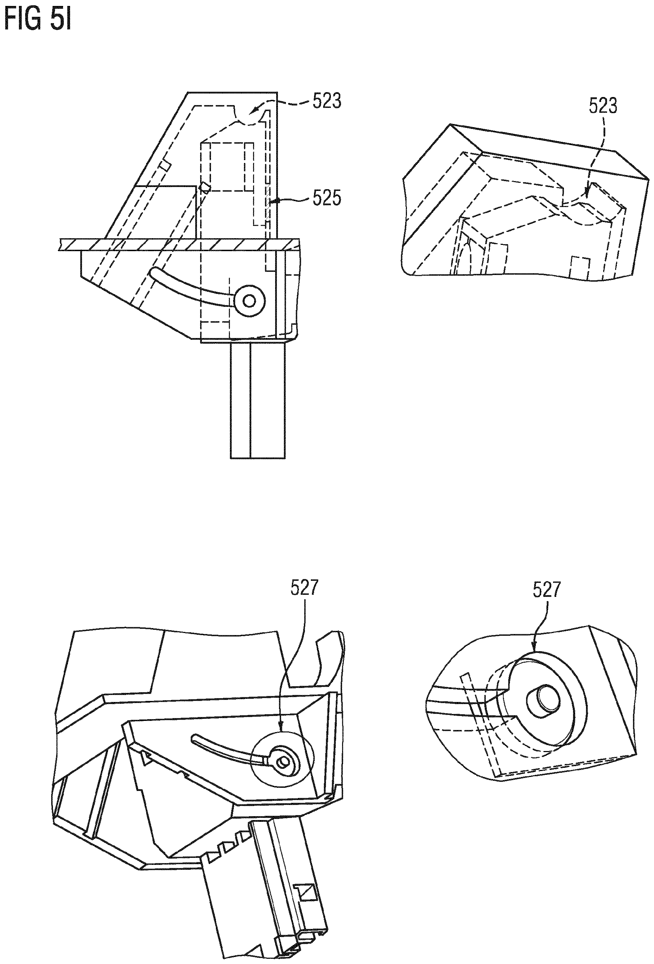

Figur 5i zeigt eine fünfte Position der Schallwandlungseinheit während der Montage des zweiten Behältnissystems, bei dem die Horizontalklipps in Zylinderlöcher 527 eingerastet beziehungsweise gelöst werden, sodass mit Hilfe des Halbzylinderlagers 523 die Endposition der Schallwandlungseinheit gewährleistet ist. Ein Kopplungselement 525 wird in der Endposition in einen vorgegeben Spalt passend eingepresst.

In anderen Ausführungsbeispielen ist ein Behältnissystem derart ausgebildet, dass ein Einführen einer Schallwandlungseinheit in eine Kavität eines Behältnisses vertikal erfolgt (nicht dargestellt) . Beispielsweise ist der Schallwandlungseinheit und dem Behältnis dazu eine Kulisse zugeordnet. Alternativ erfolgt das Einführen der Schallwandlungseinheit beispielsweise frei von einer Führung durch die Kulisse.

Bei der Herstellung dieses Behältnissystems wird die Schallwandlungseinheit vertikal in das Behältnis eingeführt und beispielsweise mittels Keil und Schraube horizontal in eine Endposition bezüglich des Behältnisses verschoben.

## Patentansprüche

1. Behältnissystem (1) für ein Fluid (3), umfassend:
- ein Behältnis (5) zur Bevorratung des Fluids (3) mit einer Außenwandung (7) sowie einer Kavität (9), welchem Behältnis (5) entweder ein Kulissenelement (21, 25, 27) oder ein Kulissenstein (31, 35, 37) zugeordnet ist,
- eine Schallwandlungseinheit (11) zur Vermessung des Fluids (3) mit einer Längsachse (13), welcher Schallwandlungseinheit (11) entweder der Kulissenstein (31, 35, 37), falls dem Behältnis (5) das Kulissenelement (21, 25, 27) zugeordnet ist, oder das Kulissenelement (21, 25, 27) zugeordnet ist, falls dem Behältnis (5) der Kulissenstein (31, 35, 37) zugeordnet ist,
- ein Kopplungselement (15) zur akustischen Kopplung der Schallwandlungseinheit (11) mit dem Behältnis (5), wobei das Kulissenelement (21, 25, 27) und der Kulissenstein (31, 35, 37) eine Kulisse bilden zur Führung der Schallwandlungseinheit (11) relativ zu dem Behältnis (5), wobei eine Kontur des Kulissenelements (21, 25, 27) derart ausgebildet ist, dass bei einem Einführen der Schallwandlungseinheit (11) in die Kavität (9) ein erster Bewegungsverlauf der Schallwandlungseinheit (11) relativ zu dem Behältnis (5) erfolgt und zwar im Wesentlichen frei von einem mechanischen Kontakt des Kopplungselements (15) mit entweder der Schallwandlungseinheit (11) oder der Außenwandung (7), und anschließend daran ein zweiter Bewegungsverlauf mit einem Verschwenken der Schallwandlungseinheit (11) relativ zu dem Behältnis (5) erfolgt bis die Schallwandlungseinheit (11) eine Endposition erreicht, in der das Kopplungselement (15) zwischen der Außenwandung (7) und der Schallwandlungseinheit (11) eingepresst ist.

2. Behältnissystem (1) nach Anspruch 1, bei dem
- dem Behältnis (5) entweder ein Gelenkkopf (29) oder eine Gelenkpfanne (39) zugeordnet ist,
- der Schallwandlungseinheit (11) entweder die Gelenkpfanne (39), falls dem Behältnis (5) der Gelenkkopf (29) zugeordnet ist, oder der Gelenkkopf (29) zugeordnet ist, falls dem Behältnis (5) die Gelenkpfanne (39) zugeordnet ist, wobei der Gelenkkopf (29) und die Gelenkpfanne (39) ein Gelenk bilden zur Führung der Schallwandlungseinheit (11) relativ zu dem Behältnis (5) in dem zweiten Bewegungsverlauf.

3. Behältnissystem (1) nach einem der vorstehenden Ansprüche 1 oder 2, bei dem
- das Kulissenelement (21, 25, 27) und der Kulissenstein (31, 35, 37) ausgebildet sind zur Fixierung der Schallwandlungseinheit (9) bezüglich des Behältnisses (5) in der Endposition.

4. Behältnissystem (1) nach einem der vorstehenden Ansprüche 1 bis 3, bei dem
- dem Behältnis (5) mindestens eine zusätzliche Führungswand (41) zugeordnet ist, die einen Teil der Kulisse umfasst.

5. Verfahren zur Herstellung eines Behältnissystems gemäß einem der Ansprüche 1 bis 4, wobei
- die Schallwandlungseinheit (11) in einem ersten Bewegungsverlauf relativ zu dem Behältnis (5) in die Kavität (9) eingeführt wird, derart, dass das Kopplungselement (15) im Wesentlichen frei ist von einem mechanischen Kontakt mit entweder der Schallwandlungseinheit (11) oder der Außenwandung (7),
- die Schallwandlungseinheit (11) in einem zweiten Bewegungsverlauf relativ zu dem Behältnis (5) verschwenkt wird bis eine Endposition der Schallwandlungseinheit (11) bezüglich des Behältnisses (5) erreicht wird, in der das Kopplungselement (15) zwischen der Außenwandung (7) und der Schallwandlungseinheit (11) eingepresst ist, und
- das Kulissenelement (21, 25, 27) und der Kulissenstein (31, 35, 37) zu einer Kulisse gekoppelt werden zur Führung der Schallwandlungseinheit (11) relativ zu dem Behältnis (5) in dem ersten Bewegungsverlauf und in dem zweiten Bewegungsverlauf.

6. Verfahren nach Anspruch 5, bei dem
- die Schallwandlungseinheit (11) bei Erreichen der Endposition bezüglich des Behältnisses (5) fixiert wird durch das Kulissenelement (21, 25, 27) und den Kulissenstein (31, 35, 37).

7. Verfahren nach einem der Ansprüche 5 und 6, bei dem
- dem Behältnis (5) entweder ein Gelenkkopf (29) oder eine Gelenkpfanne (39) zugeordnet wird,
- der Schallwandlungseinheit (11) entweder die Gelenkpfanne (39), falls dem Behältnis (5) der Gelenkkopf (29) zugeordnet wird, oder der Gelenkkopf (29) zugeordnet wird, falls dem Behältnis (5) die Gelenkpfanne (39) zugeordnet wird, wobei
- der Gelenkkopf (29) und die Gelenkpfanne (39) zu einem Gelenk gekoppelt werden zur Führung der Schallwandlungseinheit (11) relativ zu dem Behältnis (5) in dem zweiten Bewegungsverlauf.

## Claims

1. Container system (1) for a fluid (3), comprising:
- a container (5) for storing the fluid (3), with an outer wall (7) and a cavity (9), wherein either a slotted-guide element (21, 25, 27) or a sliding block (31, 35, 37) is assigned to said container (5),
- a sound transducer unit (11) for measuring the fluid (3), with a longitudinal axis (13), wherein either the sliding block (31, 35, 37), if the slotted-guide element (21,25,27) is assigned to the container (5), or the slotted-guide element (21, 25, 27), if the sliding block (31, 35, 37) is assigned to the container (5), is assigned to said sound transducer unit (11),
- a coupling element (15) for acoustically coupling the sound transducer unit (11) with the container (5), wherein the slotted-guide element (21, 25, 17) and the sliding block (31, 35, 37) form a sliding block guide for guiding the sound transducer unit (11) relative to the container (5), wherein a contour of the slotted-guide element (21, 25, 27) is formed such that, when the sound transducer unit (11) is introduced into the cavity (9), a first movement travel of the sound transducer unit (11) relative to the container (5) takes place, specifically substantially free from a mechanical contact of the coupling element (15) with either the sound transducer unit (11) or the outer wall (7), and thereafter a second movement travel with a pivoting of the sound transducer unit (11) relative to the container (5) takes place until the sound transducer unit (11) reaches an end position in which the coupling element (15) is pressed between the outer wall (7) and the sound transducer unit (11).

2. Container system (1) according to Claim 1, wherein:
- either a pivot head (29) or a pivot cup (39) is assigned to the container (5),
- either the pivot cup (39), if the pivot head (29) is assigned to the container (5), or the pivot head (29), if the pivot cup (39) is assigned to the container (5), is assigned to the sound transducer unit (11), wherein the pivot head (29) and the pivot cup (39) form an articulation joint for guiding the sound transducer unit (11) relative to the container (5) in the second movement travel.

3. Container system (1) according to either of the preceding Claims 1 and 2, wherein:
- the slotted-guide element (21, 25, 57) and the sliding block (31, 35, 37) are configured for fixing the sound transducer unit (9) relative to the container (5) in the end position.

4. Container system (1) according to any of the preceding Claims 1 to 3, wherein:
- at least one additional guide wall (41) is assigned to the container (5) and comprises part of the sliding block guide.

5. Method for producing a container system according to any of Claims 1 to 4, wherein
- the sound transducer unit (11) is introduced into the cavity (9) in a first movement travel relative to the container (5) such that the coupling element (15) is substantially free from mechanical contact with either the sound transducer unit (11) or the outer wall (7),
- in a second movement travel, the sound transducer unit (11) is pivoted relative to the container (5) until the sound transducer unit (11) reaches an end position relative to the container (5) in which the coupling element (15) is pressed between the outer wall (7) and the sound transducer unit (11), and
- the slotted-guide element (21, 25, 27) and the sliding block (31, 35, 37) are coupled into a sliding block guide for guiding the sound transducer unit (11) relative to the container (5) in the first movement travel and in the second movement travel.

6. Method according to Claim 5, wherein:
- on reaching the end position relative to the container (5), the sound transducer unit (11) is fixed by the slotted-guide element (21, 25, 27) and the sliding block (31, 35, 37).

7. Method according to either of Claims 5 and 6, wherein:
- either a pivot head (29) or a pivot cup (39) is assigned to the container (5),
- either the pivot cup (39), if the pivot head (29) is assigned to the container (5), or the pivot head (29), if the pivot cup (39) is assigned to the container (5), is assigned to the sound transducer unit (11), wherein
- the pivot head (29) and the pivot cup (39) are coupled into an articulation joint for guiding the sound transducer unit (11) relative to the container (5) in the second movement travel.

## Revendications

1. Système de cuve (1) pour un fluide (3), comprenant :
- une cuve (5) destinée à la mise en réserve du fluide (3), avec une paroi extérieure (7) ainsi qu'avec une cavité (9), cuve (5) à laquelle est associé soit un élément à coulisse (21, 25, 27), soit un coulisseau (31, 35, 37) ;
- une unité de transduction acoustique (11) avec un axe longitudinal (13), laquelle est destinée à la mesure du fluide (3) et à laquelle unité de transduction acoustique (11) est associé soit le coulisseau (31, 35, 37), si l'élément à coulisse (21, 25, 27) est associé à la cuve (5), soit l'élément à coulisse (21, 25, 27), si le coulisseau (31, 35, 37) est associé à la cuve (5) ;
- un élément de couplage (15) destiné au couplage acoustique de l'unité de transduction acoustique (11) avec la cuve (5) ; dans lequel l'élément à coulisse (21, 25, 27) et le coulisseau (31, 35, 37) forment une coulisse destinée au guidage de l'unité de transduction acoustique (11) par rapport à la cuve (5) ; dans lequel un contour de l'élément à coulisse (21, 25, 27) est conçu de telle sorte que, lors de l'introduction de l'unité de transduction acoustique (11) dans la cavité (9), une première trajectoire de déplacement de l'unité de transduction acoustique (11) a lieu par rapport à la cuve (5) et ce, pour l'essentiel, sans aucun contact mécanique de l'élément de couplage (15) soit avec l'unité de transduction acoustique (11), soit avec la paroi extérieure (7), et à la suite de quoi une deuxième trajectoire de déplacement a lieu avec un pivotement de l'unité de transduction acoustique (11) par rapport à la cuve (5), jusqu'à ce que l'unité de transduction acoustique (11) atteigne une position de fin de course, dans laquelle l'élément de couplage (15) est comprimé entre la paroi extérieure (7) et l'unité de transduction acoustique (11).

2. Système de cuve (1) selon la revendication 1, dans lequel
- soit une tête d'articulation (29), soit une cavité articulaire (39) est associée à la cuve (5) ;
- à l'unité de transduction acoustique (11) est associée soit la cavité articulaire (39), si la tête d'articulation (29) est associée à la cuve (5), soit la tête d'articulation (29), si la cavité articulaire (39) est associée à la cuve (5) ; dans lequel la tête d'articulation (29) et la cavité articulaire (39) forment un joint articulé destiné au guidage de l'unité de transduction acoustique (11) par rapport à la cuve (5), dans la deuxième trajectoire de déplacement.

3. Système de cuve (1) selon l'une des revendications précédentes 1 ou 2, dans lequel
- l'élément à coulisse (21, 25, 27) et le coulisseau (31, 35, 37) sont conçus en vue de la fixation de l'unité de transduction acoustique (9) par rapport à la cuve (5), dans la position de fin de course.

4. Système de cuve (1) selon l'une des revendications précédentes 1 à 3, dans lequel
- au moins une paroi de guidage (41) supplémentaire est associée à la cuve (5), laquelle paroi de guidage comprend une partie de la coulisse.

5. Procédé destiné à la fabrication d'un système de cuve selon l'une des revendications précédentes 1 à 4, dans lequel
- l'unité de transduction acoustique (11) est mise en place dans la cavité (9), dans une première trajectoire de déplacement par rapport à la cuve (5), de telle sorte que l'élément de couplage (15) est, pour l'essentiel, dépourvu de tout contact mécanique, soit avec l'unité de transduction acoustique (11), soit avec la paroi extérieure (7) ;
- l'unité de transduction acoustique (11) est pivotée dans une deuxième trajectoire de déplacement par rapport à la cuve (5), jusqu'à ce qu'une position de fin de course de l'unité de transduction acoustique (11) soit atteinte par rapport à la cuve (5), dans laquelle position de fin de course l'élément de couplage (15) est comprimé entre la paroi extérieure (7) et l'unité de transduction acoustique (11) ; et
- l'élément à coulisse (21, 25, 27) et le coulisseau (31, 35, 37) sont couplés pour donner lieu à une coulisse destinée au guidage de l'unité de transduction acoustique (11) par rapport à la cuve (5), dans la première trajectoire de déplacement et dans la deuxième trajectoire de déplacement.

6. Procédé selon la revendication 5, dans lequel
- l'unité de transduction acoustique (11) est fixée par l'intermédiaire de l'élément à coulisse (21, 25, 27) et du coulisseau (31, 35, 37), lorsque la position de fin de course par rapport à la cuve (5) est atteinte.

7. Procédé selon l'une des revendications précédentes 5 et 6, dans lequel
- soit une tête d'articulation (29), soit une cavité articulaire (39) est associée à la cuve (5) ;
- à l'unité de transduction acoustique (11) est associée soit la cavité articulaire (39), si la tête d'articulation (29) est associée à la cuve (5), soit la tête d'articulation (29), si la cavité articulaire (39) est associée à la cuve (5) ; dans lequel
- la tête d'articulation (29) et la cavité articulaire (39) sont couplées pour donner lieu à un joint articulé destiné au guidage de l'unité de transduction acoustique (11) par rapport à la cuve (5), dans la deuxième trajectoire de déplacement.
